# EUROPÄISCHE PATENTSCHRIFT

(11) **EP 2 358 850 B1**
(45) Veröffentlichungstag und Bekanntmachung des Hinweises auf die Patenterteilung: **24.12.2014**
(21) Anmeldenummer: 09747837.4
(22) Anmeldetag: 04.11.2009
(51) Int. Cl.: C10M 175/00, C10M 175/02, C10M 175/04, C10M 173/00, C10N 40/20

(54) **RÜCKGEWINNUNG VON SCHMIERSTOFFEN AUS GEBRAUCHTEN KÜHLSCHMIERSTOFFEN**
RECOVERING LUBRICANTS FROM USED COOLING LUBRICANTS
RÉCUPÉRATION DE LUBRIFIANTS À PARTIR DE RÉFRIGÉRANTS-LUBRIFIANTS USÉS

(30) Priorität: 27.11.2008 DE 102008059439
(43) Veröffentlichungstag der Anmeldung: 24.08.2011
(73) Patentinhaber: Hydro Aluminium Deutschland GmbH, 41515 Grevenbroich (DE)
(72) Erfinder: KUDERMANN, Gerhard, 53347 Alfter (DE); SEIFERTH, Oliver, 51143 Köln (DE)
(74) Vertreter: Minderop, Ralph H.
(86) Internationale Anmeldenummer: PCT/EP2009/064628
(87) Internationale Veröffentlichungsnummer: WO 2010/060765

(56) Entgegenhaltungen:
- DE-A1- 3 042 094
- DE-A1- 3 224 235
- DE-A1- 4 419 468

## Beschreibung

### TECHNISCHES FELD

Die Erfindung betrifft die Rückgewinnung von Schmierstoffen und Schmierstoffkonzentraten aus gebrauchten nichtwassermischbaren, wassermischbaren oder wassergemischten Kühlschmierstoffen, wie Metallbearbeitungsflüssigkeiten aus der spanenden und umformenden Metallbearbeitung.

### HINTERGRUND DER ERFINDUNG

Bei der Metallbearbeitung fallen gebrauchte Schmierstoffe und Schmierstoffschlämme an, die regelmäßig als Abfall entsorgt werden müssen. Altemulsionen und wasserhaltige Schmierstoffschlämme müssen zu relativ hohen Kosten in Wasser, Schmierstoffkomponenten sowie Verunreinigungen getrennt und einer weiteren Entsorgung zugeführt werden. Im besonderen Fall von Schmierstoffen und Schmierstoffschlämmen enthält der Abfall wertvolle Wirkstoffe. Gleichzeitig steigen neben den Entsorgungskosten zunehmend auch die Preise für die Einsatzstoffe, also für Mineralöle und Additive. Damit werden Verfahren zur Aufarbeitung von Öl-Wasser-Gemischen für eine thermische Verwertung der Ölkonzentrate und Aufbereitung des schwach ölhaltigen Wassers in biologischen Kläranlagen oder Rückgewinnung des Wassers über Umkehrosmoseanlagen für die Emulsionsherstellung oder andere Zwecke wirtschaftlich interessant. Ein noch größerer wirtschaftlicher Vorteil ergibt sich, wenn das gereinigte Ölkonzentrat in den Schmierstoffkreislauf zurückgeführt werden kann.

Für die Entwässerung von Ölschlämmen wurden beispielsweise die Verdampfung, die Membranfiltration sowie die Separator-, Dekanter- oder Trikantertechnik beschrieben. So bietet die Eisenmann Maschinenbau GmbH & Co. KG eine Anlage an, in der zunächst eine mechanische Entwässerung von ölhaltigem Rückstand in einem Trikanter erfolgt, anschließend die Ölphase zur Nutzung als Heizmittel oder für andere Zwecke aufbereitet, die Festphase verbrannt und die Wasserphase einer Ultrafiltration unterzogen wird.

Metallseifen und Metallabrieb sowie andere Komponenten, die zu einem hochviskosen Rückstand oder während der Entwässerung zeitweise zu einem hochviskosen Zustand beitragen, führen zu schwer beherrschbaren Verarbeitungsproblemen. Hochfeiner Metallabrieb lässt sich aufgrund der geringen Dichteunterschiede und besonders in Gegenwart von oberflächenaktiven Substanzen (Tensiden) und viskosem Medium mit Schwerkraft kaum oder gar nicht aus Schmieröl abtrennen.

In Verdampferanlagen führt die teilweise hochviskose Konsistenz der Öle, die mit der Entwässerung häufig ein Maximum durchläuft, zu Verklebungen und zu einer erschwerten Verflüchtigung des Wassers. Mit den bisher beschriebenen Verfahren lassen sich Metallseifen, die sich in der Emulsion bilden, nicht aus dem Öl entfernen. In der Literatur wurden Versuche zur Entfernung der Metallseifen mit Flockungsmitteln beschrieben.

Die destillative Rückgewinnung des additivierten Ölkonzentrats oder Schmierstoffkonzentrats, bei der die unerwünschten Metallseifen und Fremdölanteile im Rückstand bleiben, wurde bisher nicht beschrieben und galt wegen der hochsiedenden und teilweise thermisch empfindlichen Komponenten bislang als nicht darstellbar.

Hohe Viskosität und Verunreinigungen führen bei der Blasendestillation zu Ablagerungen, die den Wärmeübergang behindern und einen hohen Wartungsaufwand erfordern.

Hinsichtlich der Entwässerung des Öl-Wasser-Gemischs bzw. der destillativen Rückgewinnung des Wassers in Verdampferanlagen ist festzustellen, dass sich wegen der relativ hohen Verdampfungsenergie des Wassers hier eine Energierückgewinnung mit Kompressionsverdichtung als zweckmäßig erwiesen hat. Die Unterdrücke von etwa 0,5 bar, mit denen diese Verdampferanlagen betrieben werden, reichen jedoch für eine 100%ige Entwässerung nicht aus, die für eine nachfolgende destillative Aufarbeitung des Öls erforderlich wäre. Diese Verdampferanlagen erreichen zudem eine weitgehende Entwässerung über die Rückführung des Sumpfes, was zu Verkrustungsproblemen, schlechten Wärmeübergängen und zu hohem Wartungsaufwand wie auch einer erheblichen thermischen Belastung der Ölkomponenten führt, diese sogar dabei zerstört.

Während einer Veranstaltung der Society of Tribologists and Lubrication Engineers (STLE) am 06.05.2007 wurde ein Verfahren zur Rückgewinnung, Reinigung und Wiederverwendung von Öl und Wasser aus Walzemulsionen mit einem Vakuumverdampfer bei 100 bis 300 mbar absolut und einer Temperatur zwischen 50° und 70 °C vorgestellt. Im Produktwasser soll ein Restmetallgehalt von weniger als 400 mg/l verbleiben. Das gewonnene Öl hat einen Restwassergehalt von weniger als 3%. Eine weitere Verringerung des Restwassers in einem solchen Medium ist bisher nicht beschrieben worden. Das abgetrennte Wasser kann unter Umständen zur Herstellung von Öl-in-Wasser-Emulsionen wieder verwendet werden. Für die Abtrennung von Metallabrieb und Metallseifen aus dem Ölkonzentrat wurden Flockungsmittel vorgeschlagen. Die erfolgreiche Reinigung mit Flockungsmitteln hängt jedoch stark von der chemischen Zusammensetzung ab und ist hinsichtlich des Chemikaleinverbrauchs und erhöhten Reststoffanfalls vergleichsweise kostenintensiv.

Ferner ist die Entwässerung von Ölschlämmen mit Dünnfilmverdampfung bei 145 °C und 500 mbar bekannt. Diese Temperatur und dieser Unterduck reichen jedoch für eine im Wesentlichen vollständige Entwässerung ebenfalls nicht aus.

Die destillative Rückgewinnung von Schmierstoffen und Schmierstoffkonzentraten mit hochsiedenden Inhaltsstoffen aus schmierstoffhaltigen Schlämmen, beispielsweise aus Ölschlämmen, wird behindert durch die teilweise hochviskose Konsistenz, die durch Metallabrieb, Metallseifen, Abbauprodukte, polymerisierte Komponenten und oberflächenaktive Substanzen wie Polyglykole verursacht wird, sowie die hohe Siedelage von Inhaltsstoffen und die thermische Empfindlichkeit wie auch Verkrustung und die damit verbundenen Schlechten Wärmeübergänge.

Die DE 30 42 094 A1 beschreibt ein Verfahren zur kontinuierlichen Zersetzung von stabilen Kohlenstoffdispersionen in Abfall-Motorölen vor deren Wiederraffination. Dabei wird zunächst die stabile Kohlenstoffdispersion zersetzt und direkt im Anschluss an die Zersetzung die Wiederraffination durch Kurzwegedestillation durchgeführt. Die DE 44 19 468 A1 beschreibt ein Verfahren zur Herstellung und Aufbereitung einer Arbeitsemulsion aus einem Emulsionskonzentrat und Frischwasser sowie Prozesswasser, insbesondere zur Anwendung in der Metallverarbeitung. Darin ist beschrieben, dass die verbrauchte Emulsion einem Spaltreaktor zugeführt wird, in dem durch Zugabe eines organischen Spaltmittels die Emulsion in eine Ölphase (Öl-Flotat) und eine Wasserphase gespalten wird. Je nach Anforderung an die Emulsionseigenschaften wird das Flotat destillativ für einen Wiedereinsatz vorbereitet. Vor der destillativen Aufarbeitung ist das Flotat aber von Metallspänen und Metallstäuben befreit worden. Dafür ist eine mechanische und/oder elektromechanische Filterung in der Bearbeitungsstufe 2 vorgesehen. Das Flotat enthält also keinen Metallabrieb mehr.

### ZUSAMMENFASSUNG DER ERFINDUNG

Der Erfindung liegt daher die Aufgabe zugrunde, ein Verfahren zur Rückgewinnung eines in Metallbearbeitungsflüssigkeiten wieder verwendbaren Schmierstoffkonzentrats, beispielsweise aus wasserfreien und wasserhaltigen Altschmierstoffen, bereitzustellen. Für den Fall wasserhaltiger Altschmierstoffe hat eine höchstmögliche Entwässerung zu erfolgen. Aus dem wasserfreien oder im Wesentlichen entwässerten Schmierstoffkonzentrat sind unerwünschte Gehalte wie Metallfeinstabrieb, Metallseifen, Polymerisate und Fremdöl zu entfernen.

Überraschend wurde festgestellt, dass diese Aufgabe durch eine Kurzwegdestillation mit mechanischer Filmerzeugung im Verdampfer gelöst werden kann.

Gegenstand der Erfindung ist folglich ein erstes Verfahren, zur Rückgewinnung von flüssigem Schmierstoff oder Schmierstoffkonzentrat aus einem bei der Metallbearbeitung als Abfall anfallendem schmierstoffhaltigen im Wesentlichen entwässerten Gemisch mit einem Wasseranteil geringer als 1 %, das unerwünschte Gehalte an Metallfeinstabrieb, Metallseifen, Polymerisate und Fremdöl aufweist, die entfernt werden müssen, wobei man das schmierstoffhaltige, im Wesentlichen entwässerte Gemisch einer Kurzwegdestillation mit mechanischer Filmerzeugung im Verdampfer bei einer Temperatur von mindestens 150 °C und einem Druck von kleiner 1,5 mbar unterzieht, um ein in Kühlschmierstoffen wieder verwertbares Schmierstoffkonzentrat zu erhalten, das im Wesentlichen frei von Metallfeinstabrieb, Metallseifen und Polymerisaten ist.

Das Ausgangsmaterial dieses ersten Verfahrens ist das beispielsweise durch Behandlung in einem Dünnschichtverdampfer bei einer Temperatur von mindestens 100 °C und einer Druck von kleiner als 100 mbar im Wesentlichen entwässerte Schmierstoffgemisch.

Gegenstand der Erfindung ist ferner ein zweites Verfahren, zur Rückgewinnung von flüssigem Schmierstoff oder Schmierstoffkonzentrat aus einem bei der Metallbearbeitung als Abfall anfallendem schmierstoffhaltigen Gemisch, das unerwünschte Gehalte an Metallfeinstabrieb, Metallseifen, Polymerisate und Fremdöl aufweist, die entfernt werden müssen, wobei man
(a) das schmierstoffhaltige Gemisch auf einen Wasseranteil geringer als 1 % entwässert und
(b) das im Wesentlichen entwässerte Gemisch aus (a) einer Kurzwegdestillation mit mechanischer Filmerzeugung im Verdampfer bei einer Temperatur von mindestens 150 °C und einem Druck von kleiner 1,5 mbar unterzieht, um ein in Kühlschmierstoffen wieder verwertbares Schmierstoffkonzentrat zu erhalten, das im Wesentlichen frei von Metallfeinstabrieb, Metallseifen und Polymerisaten ist.

Das Ausgangsmaterial dieses zweiten Verfahrens kann das Öl enthaltene Produkt einer Grobtrenntechnik sein, die beispielsweise durch einen Separator oder einer Zentrifuge, einen Dekanter oder Trikanter erfolgt. Der Öl- oder Schmierstoffgehalt des Ausgangsmaterials des zweiten Verfahrens kann 50 bis 99 Gew.-%, bezogen auf die Masse des Ausgangsmaterials, betragen

### BESCHREIBUNG DER BEVORZUGTEN AUSFÜHRUNGSFORMEN

Ausgangsmaterial für das erfindungsgemäße Verfahren sind gebrauchte Kühlschmierstoffe. Zu diesen gehören wassermischbare, wassergemischte und nichtwassermischbare Kühlschmierstoffe. Dieser Begriff umfasst mineralölbasierte Schmierstoffe und flüssige Schmierstoffe auf Synthesebasis wie Alkylbenzole, Polyalphaolefine, Carbonsäureester, Polyetheröle wie Polyalkylenglykole, Polyglykole, aromatische Polyetheröle und Polyisobutene. Durch die oben genannten Stoffe sowie weitere Additive lassen sich die Eigenschaften der Schmierstoffe wie Oxidationsstabilität, Verschleißschutz, Korrosionsschutz, Druckstabilität (Lasttragevermögen), Schaumvermeidung, Vermeidung biologischer Keimbildung, Benetzungsfähigkeit, Emulgierfähigkeit, Spülfähigkeit modifizieren. Dafür können in diesen Flüssigkeiten verschiedenste Amine, Polyvinylpyrrolidone, Aryl-/Alkylsulfonate, Phoshorsäureester, nichtionische Tenside (in der Regel Ethoxylate), Antioxidantien und Biozide enthalten sein.

Geeignet für die erfindungsgemäße Aufbereitung sind folglich alle Schmierstoffe oder Schmierstoffkonzentrate, die bei der Metallbearbeitung als Abfall anfallen.

Durch deren Einsatz enthalten die Zusammensetzungen als Verunreinigungen Metallfeinstabrieb und Metallseifen sowie Abbauprodukte, Polymerisate und Fremdöle, die unter Umständen zu einer hochviskosen Konsistenz beitragen. Diese Verunreinigungen beinträchtigen die Wiederverwertung und ließen sich bisher nicht ausreichend abtrennen. Metallfeinstabrieb im Sinne der Erfindung sind bei der Metallbearbeitung anfallende Metallteilchen mit einer Teilchengröße von 0,1 bis 200 µm oder Metallspäne, die noch größer sind. Der Metallfeinstabrieb lässt sich in der Regel weder durch Grobtrennverfahren noch durch die bisher schon zur Entwässerung eingesetzte Dünnschichtverdampfung aus dem Ölgemisch entfernen.

Vor der erfindungsgemäßen Behandlung kann der gebrauchte Kühlschmierstoff, also vorgenannte Schmierstoff enthaltende Schlämme und Altemulsionen, dennoch einer Vorbehandlung zur Grobtrennung von Wasser und Schmierstoffen und Feststoffteilchen unterzogen werden. Das kann mittels Zentrifuge, Dekanter und/oder Trikanter erfolgen. Beispielsweise können die Schmierstoff enthaltenden Schlämme und Altemulsionen zunächst mit Zentrifuge, Dekanter und/oder mit einem Trikanter grob in Schmierstoffe, Wasser und Feststoffe getrennt werden. Dabei wird ein aufkonzentriertes Schmierstoffkonzentrat und Wasser enthaltendes Gemisch gewonnen, in dem der Schmierstoffanteil 50 bis 99,9 Gew.-%, bezogen auf die Masse dieses Gemischs, betragen kann. Auch diese Verfahrensweise ist bekannt. Relativ geringe Wassergehalte können aus solchen Zusammensetzungen, die unter Umständen hochviskose Rückstände bilden, auch durch Verdampferanlagen, die mit mechanischen Filmverteilersystemen, wie Wischern, Rollen oder Walzen, ausgestattet sind, erzielt werden. Solche Filmverdampfer mit mechanischer Filmerzeugung, beispielsweise durch rotierende mechanische Systeme, sind erfindungsgemäß für die Gewinnung eines im Wesentlichen entwässerten Ölgemischs besonders bevorzugt. Das rückgewonnene Wasser kann wieder für die Emulsionsherstellung verwendet werden. Für die Entwässerung sind folglich beispielsweise Dünnschichtverdampfer und Kurzwegverdampfer geeignet.

Das aufkonzentriertes Öl und Wasser enthaltende Gemisch kann zur Entfernung von Restwasser im Dünnschichtverdampfer einer Behandlung bei einer Temperatur von mindestens 110°C, beispielsweise 120 bis 170 °C, und einem Vakuum von kleiner 1 bar, vorzugsweise kleiner 200 mbar, beispielsweise 20 bis 150 mbar, unterzogen werden. Druck und Temperatur wird der Fachmann in Abhängigkeit von der Zusammensetzung des Ausgangsmaterials und vom eingesetzten Dünnschichtverdampfertyp einstellen. Soll für die Entwässerung eine Kurzwegdestillation eingesetzt werden, erfolgt diese unter ähnlichen Temperatur- und Druckbedingungen wie zuvor für die Dünnschichtdestillation angegeben.

Bei der kontinuierlichen Dünnschichtdestillation kann das Speisprodukt dem zylindrischen Verdampfer von oben zugeführt werden und läuft an der beheizten Außenwand (Heizmantel) ab. Der aufkonzentrierte Schmierstoff sammelt sich im unteren Bereich und wird von dort ausgeschleust. Grundsätzlich ist für die Destillation eine mechanische Filmbildung, beispielsweise durch ein rotierendes Wischersystem mit Wischer, Rollen oder Walzen, erforderlich, das in dem hochviskosen Film des Speiseprodukts an der beheizten Wand des Destillationsgefäßes ständig neue Oberflächen erzeugt und eine schnelle Phasentrennung erlaubt wie auch Verklebungen oder Verkrustungen vermeidet, damit bei der gegebenen kurzen Verweilzeit ein optimales Entwässerungsergebnis erzielt wird.

Das dabei erhaltene Schmierstoffkonzentrat ist im Wesentlichen wasserfrei. Das bedeutet, dass der Wasseranteil geringer als 1%, vorzugsweise geringer als 0,5 %, besonders bevorzugt geringer als 0,3 % ist. Es ist unter Umständen hochviskos. Es enthält immer noch Metallfeinstabrieb, Metallseifen, Polymerisate und Fremdöl. Durch die Behandlung im Dünnschichtverdampfer wird also lediglich ein im Wesentlichen entwässertes Schmierstoffkonzentrat erhalten. Die anderen einer uneingeschränkten Weiterverwendung des Schmierstoffkonzentrats entgegenstehenden Bestandteile werden nicht in ausreichendem Umfang entfernt.

Alternativ kann anstelle einer Dünnschichtverdampfung das Ausgangsmaterial durch Zentrifugieren derart behandelt werden, dass das erhaltene Ölkonzentrat im Wesentlichen wasserfrei ist. Dies kann im Labormaßstab beispielsweise durch 3 bis 10 minütiges Zentrifugieren bei etwa 3.000 G bei einer Temperatur von 60 bis 95 °C erfolgen. Der Restwasseranteil in der nichtwässerigen Phase kann 0,5 bis 0,2 Gew.-%, bezogen auf das Gewicht der nichtwässerigen Phase betragen. Auch dabei wird also lediglich ein im Wesentlichen entwässertes Schmierstoffkonzentrat erhalten. Die anderen einer Weiterverwendung des Schmierstoffkonzentrats entgegenstehenden Bestandteile werden durch Zentrifugieren nicht in ausreichendem Umfang entfernt.

Für die Rückgewinnung der für Metallbehandlungsflüssigkeiten wieder verwendbaren Bestandteile wird erfindungsgemäß die Kurzwegdestillation vorgeschlagen. Kurzwegdestillationsgeräte sind zylindrische Verdampfer mit einem innenliegenden Kondensator. Das Speisprodukt wird dem zylindrischen Verdampfer von oben zugeführt und läuft an der beheizten Außenwand (Heizmantel) ab. Der aufkonzentrierte Schmierstoff sammelt sich im unteren Bereich und wird von dort ausgeschleust. Die Filmbildung erfolgt mechanisch. Die mechanische Filmbildung kann durch Wischer, Rollen oder Walzen erfolgen. Dadurch wird ständig ein neuer Film erzeugt und die Dampfschicht zwischen Film und heißer Oberfläche jeweils zerstört. Die erfindungsgemäß eingesetzte Kurzwegdestillation erfolgt bei einer Temperatur von mindestens 150 °C und einem Druck von weniger als 1,5 mbar. Vorzugsweise liegt der Druck oder das Vakuum bei 0,001 bis 0,9 mbar. Besonders bevorzugt kann das Vakuum in einem Bereich von 0,02 bis 0,1 mbar liegen.

Diese erlaubt es, aus wasserfreiem, teilweise hochviskosem, feststoffhaltigem Schmierstoffkonzentrat beispielsweise für die Herstellung von Schmierstoffemulsionen oder die Verwendung in Schmierstoffemulsionen geeignete Stoffe zurück zu gewinnen.

Überraschend hat sich diese Technik als vorteilhaft erwiesen, weil Metallseifen vollständig und Metallfeinstabrieb wie auch Fremdöl im Wesentlichen vollständig aus einem hochviskosen Schmierstoffkonzentrat durch Kurzwegdestillation abgetrennt werden, also im Rückstand der Destillation verbleiben.

Schmierstoffkonzentrate können Polyalkylenglykole (PAG), beispielsweise als Viskositätsverbesserer oder nichtionische Tenside (Ethoxylate) enthalten. PAG und Ethoxylate verteilen sich entsprechend ihrer Löslichkeit in der Wasserphase und der Ölphase. Sie können somit auch im Ölschlamm vorhanden sein. PAG und Ethoxylate werden in Abhängigkeit von Temperatur und entsprechender Zeit thermisch zersetzt und verlieren damit ihre Wirkung. Die Zersetzung beginnt bei 150 °C und kann mit zunehmender Temperatur beschleunigt werden. Für die typischen Anteile dieser Additive reicht ab etwa 290 °C die kurze Kontaktzeit mit dem Heizmantel der Dünnschicht- bzw. Kurzwegdestillation aus, um ihre Wirkung signifikant auszuschalten.

Dies ist auch eine Möglichkeit, Reste von nichtionischen Emulgatoren zu zerstören, so dass das Ölkonzentrat ohne störende unkontrollierte Reste von Emulgatoren oder anderen nichtionischen Tensiden formelgerecht (kontrolliert) für die Wiederverwendung eingestellt werden können. Ferner kann die thermische Zersetzung von PAG, die die Viskosität von Ölschlämmen signifkant erhöhen können, der mechanischen Grobtrennung von Schmierstoffphase, Wasserphase und Metallabrieb vorgeschaltet werden, um ein besseres Trennergebnis bei der mechanischen Vorabtrennung von Ölkonzentrat zu erzielen.

Vorzugsweise ist das Destillat folglich auch frei von den häufig in Kühlschmierstoffen eingesetzten nichtionischen Polyalkylenglykol enthaltenden Tensiden, wie Polyalkylenfettalkoholether und Polyalkylenglykolfettsäureester.

Durch das erfindungsgemäße Verfahren werden Mineralöl, Fettsäuren und Schmierester zurück gewonnen. Diese können in der destillierten Form durch Zusatz der üblichen Additive zu Kühlschmierstoffen formuliert werden. Der Neuformulierung kommt der Umstand zugute, dass die Polyalkylenglykol enthaltenden Tenside vollständig destillativ abgetrennt worden sind.

Das erfindungsgemäße Verfahren eignet sich insbesondere für große Metallbearbeitungsanlagen der Stahl-, Kupfer oder Aluminiumindustrie oder Maschinenbaubetriebe, in denen in großem Umfang Schmierstoffe zum Zerspanen und Umformen von Werkstoffen eingesetzt werden. Solche Anlagen verfügen über definierte Kühlschmierstoffe. Diese Kühlschmierstoffe können durch das erfindungsgemäße Verfahren aufbereitet und zur erneuten Verwendung additiviert und somit in einem ressourcenschonenden Kreislauf betrieben werden.

Die folgenden Beispiele dienen der weiteren Erläuterung der Erfindung.

### BEISPIELE

Die Beispiele beschreiben keinen durchgängigen Prozess von der Grobabtrennung bis zur Rückgewinnung der Wertstoffe durch Kurzwegdestillation. Die Beispiele 1 und 3 wurden mit wässerigem Ölschlamm ohne vorherige Grobabtrennung durchgeführt. Das Produkt in Beispiel 2 wurde keiner weiteren Destillation unterzogen.

### Beispiel 1

Für die Entwässerungs- und Destillationsversuche wurde ein wässriger Ölschlamm aus einer Emulsion eingesetzt, der im Skimtank aufschwamm und mit einem Skimmerbalken (Flightskimmer) abgezogen wurde. Der Ölschlamm enthielt etwa 30 % Wasser und 70 % Ölkonzentrat aus Mineralöl und öllösliche Additiven. Das gebrauchte Ölkonzentrat bestand aus Mineralöl mit einem Siedebereich von 275 °C bis 450 °C bei Normaldruck, organischen Aminen, Fettsäuren, Phosphorsäureester, Fettsäureester, ethoxylierte Fettalkohole sowie Metallseifen und Fremdölanteilen, welche einen Siedebereich bis über 500 °C bei Normaldruck aufweisen.

Der Ölschlamm konnte mit der Dünnschichtdestillation bei etwa 140 °C und 30 mbar vollständig entwässert werden. Die organischen Amine und ein kleiner Teil der leichterflüchtigen Mineralölanteile wurden mit dem Wasser verflüchtigt.

Mit der Kurzwegdestillation des im Wesentlichen entwässerten Ölkonzentrats konnten mit einer Temperatur von 170 °C und 0,03 mbar das Mineralöl, Fettsäuren, Phosphorsäureester zurückgewonnen werden.

### Beispiel 2 (Grobtrennung durch Zentrifugieren)

Aus einem Tank mit einer Altölemulsion aus der Metallbearbeitung, die im wesentlichen neben Wasser Mineralöl mit einem Siedebereich von 275 °C bis 450 °C bei Normaldruck, organische Amine, Fettsäuren, Phosphorsäureester, Fettsäureester, ethoxylierte Fettalkohole sowie Metallseifen und Fremdölanteile, welche einen Siedebereich bis über 500 °C bei Normaldruck aufweisen, enthielt, wurde aufschwimmender Ölschlamm mit einer Saugvorrichtung abgepumpt und durch Zentrifugieren in seine Grobbestandteile aufgetrennt. Der Anteil an Metallabrieb und Metallseifen entsprach typischerweise den Angaben in Tabelle III. In einer Laborzentrifuge wurde 5 Minuten lang bei 3.000 G und einer Temperatur von 80 °C zentrifugiert. Die mit Wasser verunreinigte Ölphase machte 83 Vol.-% mit einem Wassergehalt von 0,3 Gew.-% aus. Die Wasserphase machte 16 Vol.-% und die Feststoffphase 0,3 Vol.-% aus. Schließlich gab es zwischen Öl- und Wasserphase noch eine beide Bestandteile und Feststoffe enthaltende Zwischenschicht. Metallseifen konnten in der Zwischenschicht und in der Ölphase nachgewiesen werden.

### Beispiel 3

Aus einem Skimtank in einem Emulsionskreislauf aus der Aluminiumverarbeitung wurde Ölschlamm abgezogen und zunächst einer Kurzwegdestillation zur Entwässerung unterzogen. Die Kondensatoroberfläche der Laborkurzwegdestillationseinrichtung betrug 4 dm². Die Kühlung des Innenkondensators erfolgt mit Wasser aus der Wasserleitung, eine Kühlfalle wurde mit flüssigem Stickstoff gekühlt.

Nach der Entwässerung wurde der entwässerte Rückstand als Speisematerial für eine weitere Kurzwegdestillation eingesetzt. Die Kühlung erfolgte wie zuvor bei der Entwässerung beschrieben. Dabei wurden unterschiedliche Temperaturen von 140 bis 300 °C eingestellt. Bedingungen und Analysewerte sind in der folgenden Tabelle 1 gezeigt.

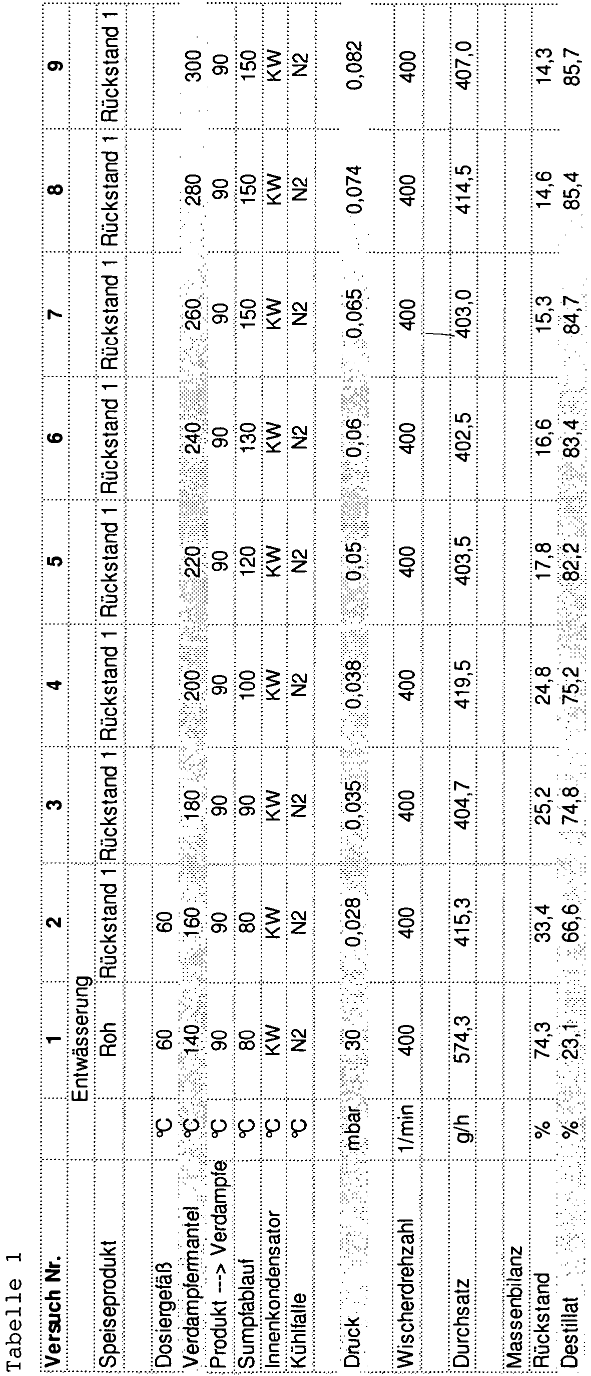

Der in der folgenden Tabelle II dargestellte Vergleich von Destillat und entsprechendem Rückstand bezieht sich auf die Proben der Tabelle I und zeigt, dass mit zunehmender Temperatur Fettsäuren und Phosporsäureester ab 200 °C weitgehend ins Destillat übergehen und somit zurückgewonnen werden. Demgegenüber werden die unerwünschten Metallseifen im Rückstand aufkonzentriert. Der im Speiseprodukt vorhandene Estergehalt aus synthetischem Alkohol und Fettsäure ist relativ niedrig (5%). Diese Ester werden bis 300 °C nur wenig destilliert. Für diese Estertypen sind noch höhere Temperaturen erforderlich.

**Tabelle II**

| | **Kinematische** | **Kohlenwasserstoffe** | | | | | **Ester** | | **Säuren** | | **Metaliseifen** | | | | **P-Ester** | |
|---|---|---|---|---|---|---|---|---|---|---|---|---|---|---|---|---|
| **Probe** | **Viskosität** | C-H31 | C-H2 | CH2/CH3 | R-C=C-R | | R-COO-R | | R-COO-H | | R-COO-M (m) | | R-COO-M (d/p) | | P/O | |
| **"VTA"** | 40°C, mm2/s | Ext. | | | Ext. | Ext.% | Ext. | Ext% | Ext. | Ext.% | Ext. | Ext.% | Ext. | Ext.% | Ext. | Ext.% |
| Destillat 02, 160 °C | 20,8 | 0,352 | 0,640 | **3,03** | 0,015 | 1,51 | 0,020 | 2,0 | 0,046 | 4,6 | <0,02 | <2 | <0,02 | <2 | 0,047 | 4,7 |
| Destillat 03, 180 °C | 22,3 | 0,351 | 0,646 | **3,06** | 0,017 | 1,71 | 0,020 | 2,0 | 0,052 | 5,2 | <0,02 | <2 | <0,02 | <2 | 0,052 | 5,2 |
| Destillat 04, 200 °C | 23,3 | 0,346 | 0,647 | **3,11** | 0,017 | 1.71 | 0,021 | 2,1 | 0,055 | 5,5 | <0,02 | <2 | <0,02 | <2 | 0,048 | 4.8 |
| Destillat 05, 220 °C | 24,1 | 0,337 | 0,634 | **3,13** | 0,017 | 1,75 | 0,021 | 2,2 | 0,057 | 5,9 | <0,02 | <2 | <0,02 | <2 | 0,044 | 4,5 |
| Destillat 06, 240 °C | 25,0 | 0,340 | 0,647 | **3,16** | 0,017 | 1,72 | 0,022 | 2,2 | 0,064 | 6,5 | <0,02 | <2 | <0,02 | <2 | 0,045 | 4,6 |
| Destillat 07, 260 °C | 25,6 | 0,328 | 0,627 | **3,17** | 0,019 | 1,99 | 0,022 | 2,3 | 0,066 | 6,9 | <0,02 | <2 | <0,02 | <2 | 0,039 | 4.1 |
| Destillat 08, 280 °C | 27,1 | 0,329 | 0,637 | **3,21** | 0,019 | 1,97 | 0,023 | 2,4 | 0,075 | 7,8 | <0,02 | <2 | <0,02 | <2 | 0,040 | 4,2 |
| Destillat 09, 300 °C | 27,5 | 0,334 | 0,653 | **3,24** | | 1.72 | 0,025 | 2,5 | 0,083 | 8,4 | <0,02 | <2 | <0,02 | <2 | 0,040 | 4.1 |
| | | | | | | | | | | | | | | | | |

| | | **Kohlenwasserstoffe** | | | | | **Ester** | | **Säuren** | | **Metallseifen** | | | | **P-Ester** | |
|---|---|---|---|---|---|---|---|---|---|---|---|---|---|---|---|---|
| **Probe** | | C-H3 | C-H2 | CH2/CH3 | R-C=C-R | | R-COO-R | | R-COO-H | | R-COO-M (m) | | R-COO-M (d/p) | | P/O | |
| "**VTA**" | | Ext. | | | Ext. | Ext.% | Ext. | Ext.% | Ext. | Ext.% | Ext. | Ext.% | Ext. 1 | Ext.% | Ext. | Ext.% |
| Rückstand 01, 140 °C | | 0,322 | 0,660 | **3,4** | 0,021 | 2,14 | 0,024 | 2,4 | 0,025 | 2,5 | 0,034 | 3,5 | 0,050 | 5,1 | 0,037 | 3,8 |
| Rückstand 02, 160 °C | | 0,288 | 0,682 | **4,0** | 0,027 | 2,78 | 0,045 | 4,6 | 0,010 | 1,0 | 0,059 | 6,1 | 0,098 | 10,1 | 0,031 | 3,2 |
| Rückstand 03, 180 °C | | 0,272 | 0,684 | **4,3** | 0,030 | 3,14 | 0,052 | 5,4 | 0,005 | 0,5 | 0,070 | 7,3 | 0,115 | 12,0 | 0,023 | 2,4 |
| Rückstand 04,200 °C | | 0,262 | 0,694 | **4,7** | 0,033 | 3,45 | 0,064 | 6.7 | 0,003 | 0,3 | 0,069 | 7,2 | 0,124 | 13,0 | 0,013 | 1,4 |
| Rückstand 05,220 °C | | 0,226 | 0,676 | **5,5** | 0,035 | 3,88 | 0,088 | 9.8 | 0,005 | 0,6 | 0,077 | 8,5 | 0,148 | 16,4 | 0,005 | 0,5 |
| Rückstand 06, 240 °C | | 0,227 | 0,673 | **5,5** | 0,037 | 4,11 | 0,094 | 10,4 | 0,005 | 0,6 | 0,084 | 9,3 | 0,159 | 17,7 | | |
| Rückstand 09, 300 °C | | 0,197 | 0,642 | **6,3** | 0,041 | 4,89 | 0,115 | 137 | 0,011 | 1,3 | 0,117 | 13,9 | 0,184 | 21,9 | | |

Die Abkürzungen in der Tabelle haben die folgende Bedeutung. Ext. =Extinktion; Ext. % = Prozent Extinktion; m = Monomer; d = Dimer; p = Polymer; P/O = an Sauerstoff gebundener Phosphor n.n. = nicht nachweisbar.

Die Messwerte der organisch-chemischen Komponenten der Tabelle II wurden durch FT-IR/ATR ermittelt (Fourier Transformation Infrarotspektrometrie/Attenuated Total Reflection). Die absoluten Extinktionen wurden auf die im Überschuss vorhandenen CH-Gruppen normiert (CH₂ und CH₃).

Die folgende Tabelle III gibt Werte an für den metallischen Abrieb und für gelöste Metallkationen (Kationen der Metallseifen, Salze aus Metall und Fettsäuren) und bezieht sich auf die Probe gemäß Versuch 1 aus Tabelle I. Feed bedeutet den Zustrom zur Entwässerung, Destillat bezieht sich auf das abgetrennte Wasser und Rückstand ist das, was entsprechend den Versuchsnummern 2 bis 9 von Tabelle durch Kurzwegdestillation weiterbehandelt wird. Es ist ersichtlich, dass durch die Entwässerung mittels Dünnschichtdestillation Metalle und Metallionen nicht abgetrennt werden. Die Aufkonzentrierung im Rückstand entspricht im Rahmen der analytischen Genauigkeit dem Wasserverlust (etwa 25 %).

Die Destillate sind nach der Kurzwegdestillation klar, d. h. frei von suspendiertem Abrieb. Bei mangelhaftem Spritzschutz können unter Umständen Metallfeinstabrieb und Metallseifen mitgerissen werden. Tabelle IV zeigt die Summe der Metalle (Abrieb und gelöst als Metallseifen), wenn durch mangelhaften Spritzschutz ein trübes Destillat erhalten wird. Der mitgerissene Metallfeinstabrieb und die mitgerissenen Metallseifen sind im Vergleich zu den Gehalten in einem entwässerten Ölschlamm (Tabelle III) vernachlässigbar.

Die folgende Tabelle III zeigt den metallischer Abrieb und gelöste Metallkationen (Metallseifen) vor und nach der Entwässerung an.

**Tabelle III**

| Probe | mg/l Al | | mg/l Fe | | mg/l Mg | |
|---|---|---|---|---|---|---|
| | fest | gelöst | fest | gelöst | fest | gelöst |
| Versuch 1 Rückstand | 14339 | 4490 | 872 | 497 | 1258 | 683 |
| Versuch 1 Feed | 11349 | 3862 | 605 | 463 | 590 | 918 |
| Versuch 1 Destillat (Wasser) | 4,7 | 21,2 | 0,3 | 3,2 | 0,2 | 3,6 |

Die typische Summe der Metalle (fest und gelöst) im Destillat nach Kurzwegdestillation bei 300 °C bei mangelhaftem Spritzschutz ist in Tabelle IV gezeigt.

**Tabelle IV**

| **mg/l Al** | **mg/l Fe** | **mg/l Mg** |
|---|---|---|
| 22 | 0,7 | 1,0 |

## Patentansprüche

1. Verfahren zur Rückgewinnung von flüssigem Schmierstoff oder Schmierstofflconzentrat aus einem bei der Metallbearbeitung als Abfall anfallendem schmierstoffhaltigen im Wesentlichen entwässerten Gemisch mit einem Wasseranteil geringer als 1 %, das unerwünschte Gehalte an Metallfeinstabrieb, Metallseifen, Polymerisate und Fremdöl aufweist, die entfernt werden müssen, **dadurch gekennzeichnet, dass** man das schmierstoffhaltige, im Wesentlichen entwässerte Gemisch einer Kurzwegdestillation mit mechanischer Filmerzeugung im Verdampfer bei einer Temperatur von mindestens 150 °C und einem Druck von kleiner 1,5 mbar unterzieht, um ein in Kühlschmierstoffen wieder verwertbares Schmierstoffltonzentrat zu erhalten, das im Wesentlichen frei von Metallfeinstabrieb, Metallseifen und Polymerisaten ist.

2. Verfahren zur Rückgewinnung von flüssigem Schmierstoff oder Schmierstoffkonzentrat aus einem bei der Metallbearbeitung als Abfall anfallendem schmierstoffhaltigen Gemisch, das unerwünschte Gehalte an Metallfeinstabrieb, Metallseifen, Polymerisate und Fremdöl aufweist, die entfernt werden müssen, **dadurch gekennzeichnet, dass** man
(a) das schmierstoffhaltige Gemisch auf einen Wasseranteil geringer als 1 % entwässert und
(b) das im Wesentlichen entwässerte Gemisch aus (a) einer Kurzwegdestillation mit mechanischer Filmerzeugung im Verdampfer bei einer Temperatur von mindestens 150 °C und einem Druck von kleiner 1,5 mbar unterzieht, um ein in Kühlschmierstoffen wieder verwertbares Schmierstoffkonzentrat zu erhalten, das im Wesentlichen frei von Metallfeinstabrieb, Metallseifen und Polymerisaten ist

3. Verfahren nach Anspruch 1 oder 2, **dadurch gekennzeichnet, dass** man die Entwässerung durch eine Dünnschichtdestillation, eine Kurzwegdestillation oder eine Trenntechnik, ausgewählt aus Dekanter, Trikanter oder Zentrifuge, vornimmt.

4. Verfahren nach einem der Ansprüche 1 bis 3, **dadurch gekennzeichnet, dass** man die Vakuumkammer der Kurzwegdestillation zur Verdampfung des im Wesentlichen entwässerten schmierstoffhaltigen Gemischs mit einem Druck von 0,001 bis 0,1 mbar betreibt.

5. Verfahren nach einem der Ansprüche 1 bis 3, **dadurch gekennzeichnet, dass** man die Vakuumkammer der Kurzwegdestillation zur Verdampfung des im Wesentlichen entwässerten schmierstofflialtigen Gemischs mit einem Druck von 0,01 bis 0,1 mbar betreibt.

6. Verfahren nach einem der Ansprüche 1 bis 3, **dadurch gekennzeichnet, dass** die Verdampferoberfläche der Kurzwegdestillation zur Verdampfung des im Wesentlichen entwässerten ölhaltigen Gemisches mit einer Temperatur von 150°C bis 350°C betrieben wird.

7. Verfahren nach einem der Ansprüche 1 bis 6, **dadurch gekennzeichnet, dass** man zur destillativen Entwässerung des schmierstoffhaltigen Gemischs eine Dünnschicht- oder Kurzwegdestillation bei einer Temperatur von 120 °C bis 170 °C durchführt.

8. Verfahren nach einem der Ansprüche 1 bis 7, **dadurch gekennzeichnet, dass** die Rückgewinnung von Ölkonzentrat aus dem schmierstoffhaltigen Gemisch batchweise oder kontinuierlich durchgeführt wird.

9. Verwendung eines Vakuum-Dünnschichtdestillators mit einem in der Vakuumkammer liegenden Kondensator und einer Einrichtung zur kontinuierlichen Erzeugung dünner Filme des zu destillierenden Guts auf der Verdampferoberfläche (Kurzwegdestillation) zur Gewinnung eines definierten Schmierstoffdestillats zur Wiederverwertung in Kühlschmierstoffen ausgehend von bei der Metallbearbeitung als Abfall anfallenden Altschmierstoffen, die unerwünschte Gehalte an Metallfeinstabrieb, Metallseifen, Polymerisate und Fremdöl aufweisen.

## Claims

1. Method for recovering fluid lubricant or lubricant concentrate from a substantially dewatered lubricant-containing mixture, obtained as waste product during metal working, having a water content of less than 1 % and undesirable contents of very finely wear debris, metal soaps, polymers and tramp oil, which have to be removed, **characterized in that** the substantially dewatered lubricant-containing mixture is subjected to short path distillation with mechanical film production in the evaporator at a temperature of at least 150°C and a pressure of less than 1.5 mbar, in order to obtain a lubricant concentrate which can be recycled into cooling lubricants and which is substantially free of very finely wear debris, metal soaps and polymers.

2. Method for recovering fluid lubricant or lubricant concentrate from a lubricant-containing mixture obtained as waste product during metal working, having undesirable contents of very finely wear debris, metal soaps, polymers and tramp oil, which have to be removed, **characterized in that**
(a) the lubricant-containing mixture is substantially dewatered to a water content of less than 1 % and
(b) the substantially dewatered mixture of (a) is subjected to short path distillation with mechanical film production in the evaporator at a temperature of at least 150°C and a pressure of less than 1.5 mbar, in order to obtain a lubricant concentrate which can be recycled into cooling lubricants and which is substantially free of very finely wear debris, metal soaps and polymers.

3. Method according to claim 1 or 2, **characterized in that** the dewatering is carried out by thin film distillation, short path distillation or a separation technique selected from decanter, tricanter or centrifuge.

4. Method according to any one of claims 1 to 3, **characterized in that** the vacuum chamber of the short path distillation for evaporating the substantially dewatered lubricant-containing mixture is operated at a pressure of 0.001 to 0.1 mbar.

5. Method according to any one of claims 1 to 3, **characterized in that** the vacuum chamber of the short path distillation for evaporating the substantially dewatered lubricant-containing mixture is operated at a pressure of 0.01 to 0.1 mbar.

6. Method according to any one of claims 1 to 3, **characterized in that** the evaporation surface of the short path distillation for evaporating the substantially dewatered oil-containing mixture is operated at a temperature of 150°C to 350°C.

7. Method according to any one of claims 1 to 6, **characterized in that** thin film distillation or short path distillation is carried out at a temperature of 120°C to 170°C to dewater the lubricant-containing mixture by distillation.

8. Method according to any one of claims 1 to 7, **characterized in that** the recovery of oil concentrate from the mixture containing lubricant is carried out batchwise or continuously.

9. Use of a vacuum thin film distillation apparatus having a condenser in the vacuum chamber and a device for continuously producing thin films of the substance to be distilled on the evaporation surface (short path distillation) for obtaining a defined lubricant distillate for reuse in cooling lubricants, starting with a waste product obtained during metal working having undesirable contents of very finely wear debris, metal soaps, polymers and tramp oil.

## Revendications

1. Procédé de récupération de lubrifiant liquide ou de concentré de lubrifiant à partir d'un mélange sensiblement déshydraté contenant du lubrifiant en tant que déchet métallurgique ayant une teneur d'eau inférieure à 1 % et contenant des particules de métaux extrêmement fines, des savons métalliques, des polymérisats et des huiles étrangères indésirables, qui doivent être éliminés,
**caractérisé en ce que** le mélange sensiblement déshydraté, contenant du lubrifiant est soumis à une distillation à court trajet avec formation mécanique de film, dans un évaporateur, à une température d'au moins 150 °C et sous une pression inférieure à 1,5 mbar, en vue d'obtenir un concentré de lubrifiant sensiblement exempt de particules métalliques extrêmement fines, de savons métalliques et de polymérisats, qui peut être réutilisé dans des lubrifiants réfrigérants.

2. Procédé de récupération de lubrifiant liquide ou de concentré de lubrifiant à partir d'un mélange contenant du lubrifiant en tant que déchet métallurgique contenant des particules de métaux extrêmement fines, des savons métalliques, des polymérisats et des huiles étrangères indésirables, qui doivent être éliminés,
**caractérisé en ce que**
(a) le mélange contenant du lubrifiant est déshydraté à une teneur en eau inférieure à 1 %, et
(b) le mélange sensiblement déshydraté selon (a) est soumis à une distillation à court trajet avec formation mécanique de film, dans un évaporateur, à une température d'au moins 150 °C et sous une pression inférieure à 1,5 mbar, en vue d'obtenir un concentré de lubrifiant sensiblement exempt de particules métalliques extrêmement fines, de savons métalliques et de polymérisats, qui peut être réutilisé dans des lubrifiants réfrigérants.

3. Procédé selon revendication 1 ou 2, **caractérisé en ce que** la déshydratation est effectuée par une distillation à couche mince, une distillation à court trajet ou selon une technique qui est choisie parmi la décantation, la tridécantation ou la centrifugation.

4. Procédé selon l'une des revendications 1 à 3, **caractérisé en ce que** la chambre à vide de la distillation à court trajet pour l'évaporation du mélange à teneur en lubrifiant sensiblement déshydraté est exploitée sous une pression de 0,001 à 0,1 mbar.

5. Procédé selon l'une des revendications 1 à 3, **caractérisé en ce que** la chambre à vide de la distillation à court trajet pour l'évaporation du mélange à teneur en lubrifiant sensiblement déshydraté est exploitée sous une pression de 0,01 à 0,1 mbar.

6. Procédé selon l'une des revendications 1 à 3, **caractérisé en ce que** la surface de l'évaporateur de la distillation à court trajet pour l'évaporation du mélange huileux, sensiblement déshydraté est exploitée à une température de 150 °C à 350 °C.

7. Procédé selon l'une des revendications 1 à 6, **caractérisé en ce que**, pour la déshydratation par distillation du mélange contenant du lubrifiant, on procède à une distillation à couche mince ou à une distillation à court trajet à une température de 120 °C à 170 °C.

8. Procédé selon l'une des revendications 1 à 7, **caractérisé en ce que** la récupération de concentré d'huile à partir du mélange contenant du lubrifiant est exécutée par lots ou en continu.

9. Utilisation d'un distillateur pour distillation à couche mince sous vide, avec un condensateur installé dans la chambre à vide et un dispositif qui génère en continu, sur la surface de l'évaporateur (distillation à court trajet), de fines couches de produit en vue de la collecte d'un distillat de lubrifiant défini, destiné à être réutilisé dans des lubrifiants réfrigérants, à partir de lubrifiants usés, se présentant en forme de déchets métallurgiques, qui contiennent des particules métalliques, extrêmement fines, des savons métalliques, des polymérisats et des huiles étrangères indésirables.
